(19) Europäisches Patentamt

European Patent Office

Office européen des brevets

(11) **EP 1 428 112 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(21) Anmeldenummer: **02774706.2**

(22) Anmeldetag: **11.10.2002**

(51) Int Cl.$^7$: **G06F 7/72**

(86) Internationale Anmeldenummer:
**PCT/EP2002/011424**

(87) Internationale Veröffentlichungsnummer:
**WO 2003/034172 (24.04.2003 Gazette 2003/17)**

(54) **VERFAHREN UND VORRICHTUNG ZUM BERECHNEN EINES ERGEBNISSES EINER EXPONENTIATION**

METHOD AND DEVICE FOR CALCULATING THE RESULT OF AN EXPONENTIATION

PROCEDE ET DISPOSITIF POUR CALCULER LE RESULTAT D'UNE EXPONENTIATION

(84) Benannte Vertragsstaaten:
**DE FR**

(30) Priorität: **17.10.2001 DE 10151129**

(43) Veröffentlichungstag der Anmeldung:
**16.06.2004 Patentblatt 2004/25**

(73) Patentinhaber: **Infineon Technologies AG**
**81669 München (DE)**

(72) Erfinder:
• **FISCHER, Wieland**
**80469 München (DE)**
• **SEIFERT, Jean-Pierre**
**81669 München (DE)**

(74) Vertreter: **Stöckeler, Ferdinand, Dipl.-Ing.**
**Schoppe, Zimmermann,**
**Stöckeler & Zinkler**
**Postfach 246**
**82043 Pullach bei München (DE)**

(56) Entgegenhaltungen:
**WO-A-00/25204**

• **OSWALD E ET AL: "RANDOMIZED ADDITION-SUBTRACTION CHAINS AS A COUNTERMEASURE AGAINST POWER ATTACKS" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN: SPRINGER, DE, Bd. 2162, 14. Mai 2001 (2001-05-14), Seiten 39-50, XP001061159 ISBN: 3-540-42521-7**
• **KOCHER P C: "TIMING ATTACKS ON IMPLEMENTATIONS OF DIFFIE-HELLMAN, RSA, DSS, AND OTHER SYSTEMS" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS, PROCEEDINGS OF THE ANNUAL INTERNATIONAL CRYPTOLOGY CONFERENCE (CRYPTO), BERLIN, SPRINGER, DE, Bd. CONF. 16, August 1996 (1996-08), Seiten 104-113, XP002930296 ISBN: 3-540-61512-1**

**Beschreibung**

Die vorliegende Erfindung bezieht sich auf mathematische Algorithmen für kryptographische Anwendungen und insbesondere auf die Berechnung von Exponentiationen, wie sie beispielsweise im RSA-Kryptoalgorithmus verwendet werden.

Das RSA-Kryptosystem, das nach seinen Erfindern R. Rivest, A. Shamir und L. Adleman benannt ist, ist eines der am meisten verwendeten Public-Key-Kryptosysteme. Dieses Verfahren ist im Abschnitt 8.2 des "Handbook of Applied Cryptography", Menezes, van Oorschot, Vanstone, CRC Press, 1996, beschrieben. Das RSA-Kryptosystem kann dazu verwendet werden, um sowohl Verschlüsselungen durchzuführen als auch digitale Unterschriften auszuführen. Seine Sicherheit basiert auf der schweren Durchführbarkeit des Ganzzahlfaktorisierungsproblems. Sowohl zur RSA-Verschlüsselung als auch zur RSA-Entschlüsselung muß eine modulare Exponentiation folgender Form durchgeführt werden:

$$E = B^d \text{ modulo } N$$

Hierbei stellt B die Basis dar, während d der Exponent ist und N der Modul.

Bei der RSA-Verschlüsselung ist der Exponent d Teil des öffentlichen Schlüssels. Bei der RSA-Entschlüsselung ist der Exponent d dagegen Teil des privaten Schlüssels, der gegen Ausspähungen gesichert werden muß.

Kryptographieschaltungen stehen nunmehr vor der Aufgabe, diese modulare Exponentiation einerseits sicher und andererseits schnell bzw. effizient zu berechnen. Kryptographieschaltungen werden ferner häufig in Anwendungen eingesetzt, bei denen Rechen- und Speicherressourcen begrenzt sind. So ist es nicht möglich, auf einer SmartCard, die z. B. für Identifikationszwecke oder in Verbindung mit Geldtransaktionen eingesetzt wird, hohe Speicher- oder Rechenressourcen vorzusehen.

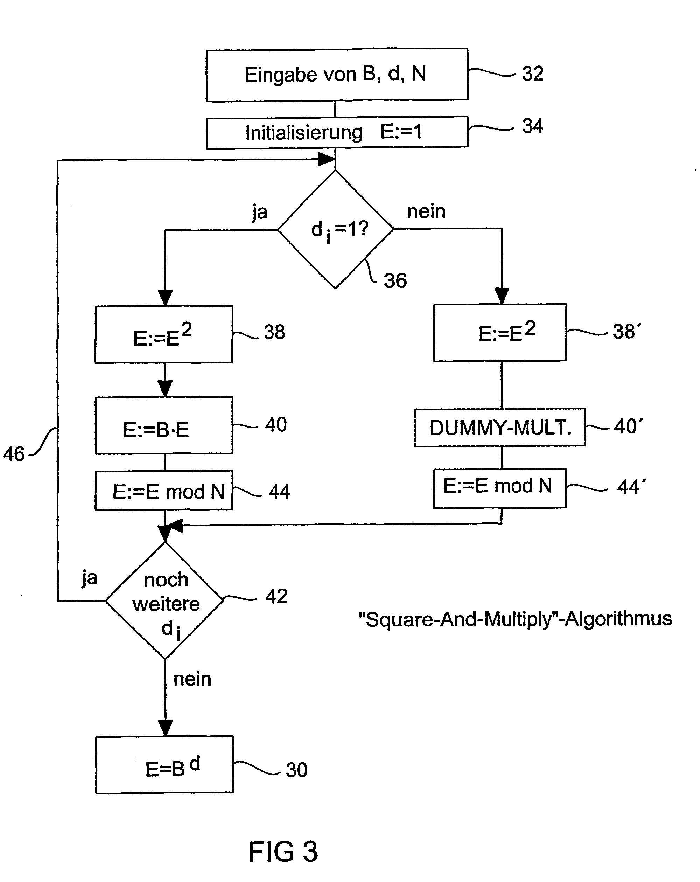

Typischerweise wird die Exponentiation, unabhängig davon, ob sie modular ist oder nicht, mit dem sogenannten "Square-and-Multiply"-Algorithmus berechnet. Hierzu wird auf Fig. 3 Bezug genommen. Zunächst wird die Exponentiation ohne modulare Reduktion beschrieben. Im Anschluß daran wird dann ausgeführt, wie der Algorithmus im Restklassensystem des Moduls N praktiziert werden kann.

Die Aufgabe besteht darin, das Ergebnis E der Exponentiation $B^d$ zu berechnen, wie es im Block 30 von Fig. 3 ausgeführt ist. Der Exponent d ist ein binärer Exponent und besteht aus mehreren Bits, die sich von einem höchstwertigen Bit (msb) bis zu einem niederstwertigen Bit (lsb) erstrecken. Zunächst werden die Zahlen B, d bereitgestellt, wie es durch einen Block 32 in Fig. 3 dargelegt ist. Dann wird der Ergebniswert E auf einen Wert von 1 initialisiert, wie es durch einen Block 34 dargestellt ist.

Im nachfolgenden wird nun der Exponent d Stelle für Stelle untersucht bzw. abgescannt, wobei eine Stelle des Exponenten mit $d_i$ bezeichnet ist. Hat die Stelle bzw. beispielsweise das Bit des Exponenten, das gerade untersucht wird, einen Wert von 1, wie es durch einen Entscheidungsblock 36 untersucht wird, so wird der linke Zweig in Fig. 3 eingeschlagen. Hat das untersuchte Bit des Exponenten dagegen einen Wert von 0, so wird der rechte Zweig von Fig. 3 eingeschlagen.

Wird durch den Entscheidungsblock 36 festgestellt, daß das untersuchte Bit des Exponenten einen Wert von 1 hat, so wird zunächst der Square-Schritt 38 durchgeführt, d. h. der aktuelle Ergebniswert wird quadriert. Anschließend wird in einem Multiply-Schritt 40 die Basis B auf den aktuellen Wert des Ergebniswerts E, also das Ergebnis des Schritts 38, aufmultipliziert. In einem weiteren Entscheidungsblock 42 wird dann untersucht, ob noch weitere Stellen des Exponenten existieren. Ist dies der Fall, so wird über eine Schleife 46 zurückgesprungen und untersucht, ob die nächste Stelle $d_i$ des Exponenten eine 1 oder eine 0 hat (Block 36). Ist die untersuchte nächste Stelle gleich Null, so wird der Square-Schritt 38' des rechten Zweigs von Fig. 3 ausgeführt. Im Gegensatz zum linken Zweig findet jedoch in dem Fall, in dem die untersuchte Stelle des Exponenten gleich 0 ist, keine Multiply-Operation, die dem Block 40 des linken Zweigs von Fig. 3 entsprechen würde, statt.

Das oben beschriebene Prozedere wird, ausgehend vom höchstwertigen Bit des Exponenten d, solange wiederholt, bis das niederstwertige Bit erreicht ist. Nach der Verarbeitung des niederstwertigen Bits wird der Block 42 feststellen, daß keine weiteren $d_i$ mehr vorhanden sind. Der aktuelle Wert des Ergebniswerts E ist dann das Gesamtergebnis E der Exponentiation, das im Block 30 ausgegeben wird.

Um aus der in Fig. 3 beschriebenen Exponentiation eine modulare Exponentiation zu machen, wird im Block 32 zusätzlich zur Basis B und zum Exponenten d auch der Modul N eingegeben. Darüber hinaus findet in beiden Zweigen eine modulare Reduktion (Block 44 im linken Zweig bzw. Block 44' im rechten Zweig) statt, so daß generell gesagt nach jeder Multiplikation eine modulare Reduktion durchgeführt wird, derart, daß der Ergebniswert E am Ende der Verarbeitung für jede Stelle des Exponenten in der Restklasse des Moduls N liegt.

Es sei darauf hingewiesen, daß die Multiplikation und die modulare Reduktion nicht unbedingt in zwei aufeinanderfolgende Schritte aufgeteilt werden muß. In der Technik sind kombinierte Multiplikations-Look-Ahead- und Reduktions-Look-Ahead-Verfahren bekannt, die eine effiziente Berechnung einer Multiplikation erlauben. An dieser Stelle sei besonders der sogenannte ZDN-Algorithmus hervorgehoben.

Der in Fig. 3 gezeigte Square-and-Multiply-Algorithmus in seiner einfachsten Form ist in zweierlei Hinsicht problematisch.

Zunächst fehlt beim Vergleich der beiden Zweige im rechten Zweig, also wenn eine Stelle des Exponenten gleich 0 ist, eine Operation. Die beiden Zweige in Fig. 3 sind dahingehend unsymmetrisch, daß eine Multiplikation (Block 40) ausgeführt wird, falls eine Stelle des Exponenten gleich 1 ist, während es im rechten Zweig keine entsprechende Operation gibt. Dies bedeutet, daß der Square-and-Multiply-Algorithmus somit durch sogenannte Timing Attacks und Power Analyses Attacks angreifbar ist. Um eine Homogenisierung sowohl zeitlich als auch strommäßig herbeizuführen, d. h. daß der Zeit- und der Leistungsverbrauch der Schaltung konstant sind, unabhängig davon, ob eine 0 oder eine 1 im Exponenten steht, kann im rechten Zweig eine Dummy-Multiplikation 40' eingeführt werden, wobei das Ergebnis der Dummy-Multiplikation jedoch nicht verwendet wird, sondern lediglich das Ergebnis des Blocks 38', also des Square-Schritts.

Die Dummy-Multiplikation führt zwar zu einer zeitlichen und strommäßigen Homogenisierung beider Zweige, erfordert jedoch Rechenressourcen. Die Dummy-Multiplikation führt somit - auf Kosten der Gesamtperformance der Schaltung - zu einer höheren Sicherheit.

Ein weiterer Nachteil des in Fig. 3 beschriebenen Square-and-Multiply-Algorithmus ist die Tatsache, daß dieser Algorithmus nicht für eine parallele Ausführung geeignet ist. Wenn beispielsweise der linke Zweig betrachtet wird, so ist es nicht möglich, die Blöcke 38 und 40 parallel zu berechnen, da die Berechnungen im Block 40 von den Berechnungen im Block 38 abhängig sind. Ein Rechenwerk muß daher zunächst den Block 38 berechnen und dann, wenn das Ergebnis der Quadrierungsoperation vorliegt, die Berechnungen des Blocks 40, d. h. die Aufmultiplikation der Basis auf das Ergebnis des Blocks 38, durchführen.

Oswald et al: "Randomized Addition-Subtraction chains etc..." (CHES 2001, Paris, 14-16 May 2001) Lecture Notes in Computer Science, Berlin; Springer, Bd. 2162, 14. Mai 2001, Seiten 39-50, offenbart den nächstliegen den Stand der Technik.

Die Aufgabe der vorliegenden Erfindung besteht darin, ein sicheres und effizientes Konzept zum Berechnen eines Ergebnisses einer Exponentiation zu schaffen.

Diese Aufgabe wird durch ein Verfahren zum Berechnen eines Ergebnisses einer Exponentiation gemäß Patentanspruch 1 oder durch eine Vorrichtung zum Berechnen eines Ergebnisses einer Exponentiation gemäß Patentanspruch 7 gelöst.

Der vorliegenden Erfindung liegt die Erkenntnis zugrunde, daß von dem Square-and-Multiply-Algorithmus, der einerseits unsymmetrisch ist und andererseits lediglich eine serielle Ausführung erlaubt, weggegangen werden muß. Statt dessen wird die modulare Exponentiation unter Verwendung zweier Hilfsgrößen berechnet. Für jede Stelle des Exponenten werden zwei Multiplikationen berechnet, und zwar die Multiplikation einer Hilfsgröße mit sich selbst und die Multiplikation der beiden Hilfsgrößen miteinander. Dieses Konzept kann als Montgomery-Leiter betrachtet werden, die darauf basiert, daß der Unterschied der beiden Hilfsgrößen immer darin besteht, daß das Verhältnis der Hilfsgrößen untereinander gleich der Basis B ist.

Ein Vorteil der vorliegenden Erfindung besteht darin, daß unabhängig davon, welchen Wert der Exponent hat, die Anzahl der Rechenoperationen gleich ist (zwei Multiplikationen).

Ein weiterer Vorteil der vorliegenden Erfindung besteht darin, daß die beiden Multiplikationen, die pro Exponent zu berechnen sind, voneinander unabhängig sind. Die beiden Multiplikationen können daher parallel berechnet werden. Besonders dieses Merkmal führt zu einem Performancegewinn vom Faktor 2 gegenüber dem in Fig. 3 bezeichneten Square-and-Multiply-Algorithmus mit Dummy-Multiplikation. Selbst gegenüber dem Square-and-Multiply-Algorithmus ohne Dummy-Multiplikation wird noch ein Performancegewinn vom Faktor 1, 5 durch das erfindungsgemäße Konzept erreicht.

Es sei darauf hingewiesen, daß das erfindungsgemäße Konzept inhärent sicher gegenüber Timing- und Power-Attacken ist, da die "Rechenarbeit" des Algorithmus immer gleich ist, unabhängig davon, ob die Stelle des Exponenten gleich 0 oder gleich 1 ist.

Bei bevorzugten Ausführungsbeispielen wird das erfindungsgemäße Konzept zur Berechnung von modularen Exponentiationen eingeführt. Hierzu werden die beiden Hilfsgrößen am Ende der Verarbeitung jedes Exponenten auf die Restklasse bezüglich des Moduls N reduziert, wobei beliebige Algorithmen eingesetzt werden können, um eine Multiplikation samt modularer Reduktion unter Verwendung von Look-Ahead-Techniken durchzuführen. An dieser Stelle sei erneut auf das bekannte ZDN-Verfahren verwiesen.

Bevorzugte Ausführungsbeispiele der vorliegenden Erfindung werden nachfolgend bezugnehmend auf die beiliegenden Zeichnungen näher erläutert. Es zeigen:

Fig. 1 ein Blockschaltbild des erfindungsgemäßen Verfahrens zum Berechnen eines Ergebnisses einer Exponentiation;

Fig. 2    ein Blockdiagramm des Verfahrens von Fig. 1 mit modularer Reduktion; und

Fig. 3    eine allgemeine Darstellung des bekannten Square-and-Multiply-Algorithmus mit und ohne Dummy-Multiplikation.

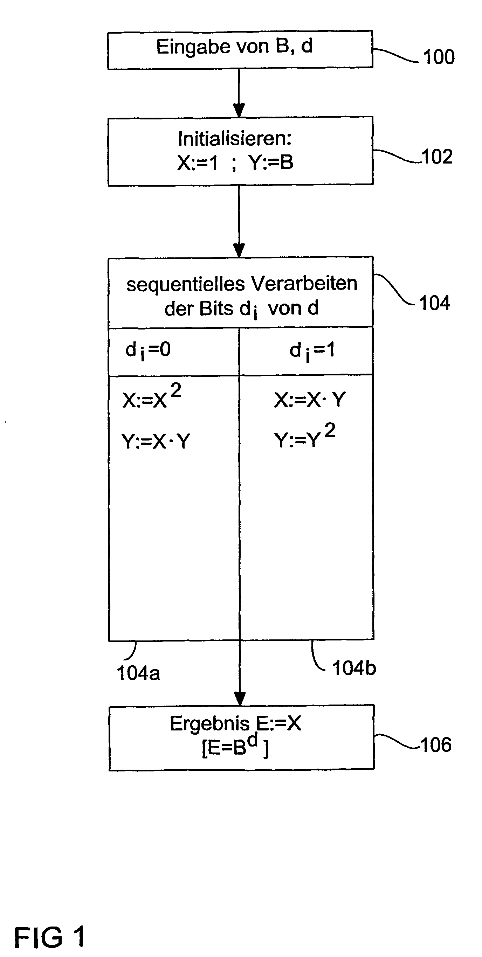

In der nachfolgenden Erläuterung des erfindungsgemäßen Konzepts werden die gleichen Größen wie bei der Beschreibung von Fig. 3 verwendet. Zunächst werden in einem Schritt 100 die Basis B und der Exponent d eingegeben. In einem Schritt 102 werden dann die beiden Hilfsgrößen X und Y initialisiert, wie es in Fig. 1 dargestellt ist. Insbesondere erhält X den Wert 1, während Y den Wert der Basis B erhält. In einem Block 104 werden dann die Bits $d_i$ des Exponenten d vorzugsweise vom höchstwertigen Bit des Exponenten sequentiell bis zum niederstwertigen Bit des Exponenten verarbeitet. Ist das aktuelle Bit des Exponenten $d_i$ gleich 0, so findet die linke Spalte 104a des Blocks 104 Anwendung, während, wenn das aktuelle Bit $d_i$ des Exponenten gleich 1 ist, die rechte Spalte 104b des Blocks 104 Anwendung findet. Insbesondere wird im Fall des Exponentenbits gleich 0 die Hilfsgröße X derart berechnet, daß sie gleich dem Quadrat der alten Hilfsgröße X ist. Die Hilfsgröße Y wird derart berechnet, daß sie gleich dem Produkt der alten Hilfsgröße X und der alten Hilfsgröße Y ist.

Im anderen Fall, also wenn die betrachtete Stelle des Exponenten gleich 1 ist, wird die Hilfsgröße X so berechnet, daß sie gleich dem Produkt der alten Hilfsgröße X und der alten Hilfsgröße Y ist. Die zweite Hilfsgröße Y ist gleich dem Quadrat der alten Hilfsgröße Y.

Aus Fig. 1 ist zu sehen, daß die beiden Produkte zur Berechnung von X und Y unabhängig voneinander sind, also parallel berechnet werden können. Diese Parallelisierbarkeit ermöglicht einen hohen Performancegewinn.

Wenn alle Bits $d_i$ des Exponenten d verarbeitet sind, wird zu einem Block 106 gesprungen. Der Block 106 ermöglicht die Ausgabe des Ergebniswerts E. Der am Ende der Verarbeitung aller Bits vorhandene Wert der ersten Hilfsgröße X ist gleich dem Ergebnis der Exponentiation $B^d$.

Im nachfolgenden wird das erfindungsgemäße Konzept anhand eines einfachen Zahlenbeispiels illustriert. Es sei angenommen, daß der Exponent d binär und vierstellig ist und folgenden Wert hat :

$$d = 1011.$$

Nach dem Schritt 102 des Initialisierens haben die beiden Hilfsgrößen folgende Werte:

$$X = 1; Y = B.$$

Die höchstwertige Stelle des Exponenten d ist 1. Dies bedeutet, daß die beiden Hilfsgrößen nach einem ersten Durchlauf des Teilblocks 104b folgende Werte haben:

$$X = B; Y = B^2.$$

Die nächstniedrigere Stelle des Exponenten d ist gleich 0. Dies führt dazu, daß im Block 104 der linke Teilblock 104a genommen werden muß. Am Ende der Verarbeitung durch den Block 104a haben die beiden Hilfsgrößen folgende Werte:

$$X = B^2; Y = B^3.$$

Die nächstniedrigere Stelle des Exponenten ist eine 1. Dies bedeutet, daß wieder der rechte Teilblock 104b des Blocks 104 durchlaufen werden muß. Am Ende der Verarbeitung haben die beiden Hilfsgrößen folgenden Wert:

$$X = B^5; Y = B^6.$$

Die niederstwertige Stelle des Exponenten d hat schließlich den Wert 1. Dies bedeutet, daß wieder der rechte Teilblock 104b des Blocks 104 durchlaufen werden muß. Am Ende der Verarbeitung haben die beiden Hilfsgrößen folgende Werte:

$$X = B^{11}; Y = B^{12}.$$

Nun sind alle Bits des Exponenten d verarbeitet und es kann zum Block 106 gesprungen werden. Das Ergebnis der Exponentiation, also der aktuelle Wert der Hilfsgröße X, beträgt $B^{11}$, wobei der Wert 11 im Dezimalsystem dem Wert 1011 im Binärsystem entspricht.

Aus dem vorangegangenen Rechenbeispiel wird deutlich, daß sämtliche Zwischenergebnisse des erfindungsgemäßen Konzepts verwendet werden, d. h. daß keine Dummy-Multiplikationen stattfinden. Sämtliche Zwischenergebnisse werden verwendet, abgesehen von dem Ergebnis der Hilfsgröße Y im letzten Schritt. Sie wird nicht benötigt und muß daher auch nicht zwingend berechnet werden. Wenn festgestellt wird, daß die letzte Stelle des Exponenten aktuell verarbeitet wird, so würde es genügen, nur die erste Hilfsgröße X zu berechnen. Aus Sicherheitsgründen kann jedoch das parallel arbeitende Rechenwerk zur Berechnung des Werts von Y ebenfalls mitlaufen. Der Ergebniswert wird dann nicht mehr verwendet.

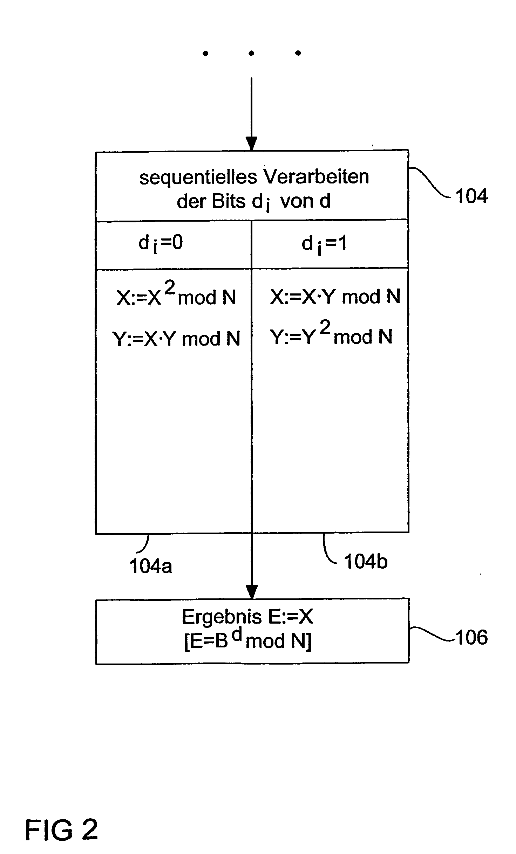

Im nachfolgenden wird auf Fig. 2 Bezug genommen. Fig. 2 unterscheidet sich von Fig. 1 lediglich dadurch, daß statt einer üblichen Exponentiation eine modulare Exponentiation in der allgemeinen Einheitengruppe von **Z** modulo N berechnet wird, wie sie etwa im RSA-Verfahren benutzt wird. Hierzu findet bei jeder Berechnung der Hilfsgröße, sei es im Teilblock 104a oder im Teilblock 104b, eine modulare Reduktion mod N statt. Dies führt automatisch dazu, daß am Ende das Ergebnis der modularen Exponentiation $B^d$ mod N erhalten wird.

Im Pseudocode lautet der erfindungsgemäße Algorithmus folgendermaßen:

```
Eingabe: Basis B, Modul N, Exponent d

n: = Länge des Exponenten d


i: = 0
(X, Y): = (1, B)
während (i < n) do
wenn dᵢ = 0, dann
      (X, Y): = (X² mod N, XY mod N)
ansonsten, wenn dᵢ = 1, dann
      (X, Y): = (XY mod N, Y² mod N)
ende wenn
i: = i + 1
ende während
E: = X


Ausgabe: E (= Bᵈ modulo N).
```

Das erfindungsgemäße Konzept ist dahingehend vorteilhaft, daß es das Zeitprofil und das Stromprofil homogenisiert und zusätzlich aufgrund einer Parallelisierbarkeit Performancegewinne erlaubt. Ferner wird kein berechnetes Zwischenergebnis verworfen. Dies wird erreicht, indem ein der Montgomery-Leiter für elliptische Kurven ähnliches Konzept auf beliebige abstrakte Gruppen, wie z. B. die Einheitengruppe von **Z** modulo N angewendet wird, wie sie etwa im RSA-Verfahren benutzt wird.

Bezugszeichenliste

| | |
|---|---|
| 30 | Ausgeben des Ergebnisses |
| 32 | Eingeben von B, d, N |
| 34 | Initialisierung des Ergebnisses |
| 36 | Untersuchen des Bits des Exponenten |
| 38 | Quadrierungsschritt, falls das Bit des Exponenten gleich 1 ist |
| 38' | Quadrierungsschritt, falls das Bit des Exponenten gleich 0 ist |
| 40 | Multiplikationsschritt |
| 40' | Dummy-Multiplikationsschritt |
| 42 | Untersuchen, ob weitere Bits $d_i$ vorhanden sind |
| 44 | Reduktionsschritt, falls das Bit gleich 1 ist |
| 44' | Reduktionsschritt, falls das Bit des Exponenten gleich 0 ist |
| 46 | Iterationsschleife |
| 100 | Eingabe von B, d |
| 102 | Initialisieren von X, Y |
| 104 | sequentielles Verarbeiten der Bits von d |
| 104a | Aktualisieren der Hilfsgrößen, wenn $d_i$ = 0 |
| 104b | Aktualisieren der Hilfsgrößen, wenn $d_i$ = 1 |
| 106 | Ausgeben des Ergebnisses |

**Patentansprüche**

1. Verfahren zum Berechnen eines Ergebnisses E einer Exponentiation $B^d$, bzw. $B^d$ mod N, wobei B eine Basis ist und wobei d ein Exponent ist, wobei der Exponent durch eine binäre Zahl aus einer Mehrzahl von Bits darstellbar ist, mit folgenden Schritten:

   Initialisieren (102) einer ersten Hilfsgröße X auf einen Wert von 1;

   Initialisieren (102) einer zweiten Hilfsgröße Y auf die Basis B;

   sequentielles Verarbeiten (104) der Bits des Exponenten durch:

   Aktualisieren (104a) der ersten Hilfsgröße X durch $X^2$, bzw. $X^2$ mod N, und Aktualisieren der zweiten Hilfsgröße Y durch X*Y, bzw. X*Y mod N, falls ein Bit des Exponenten gleich 0 ist, oder

   Aktualisieren (104b) der ersten Hilfsgröße X durch X*Y, bzw. X*Y mod N, und Aktualisieren der zweiten Hilfsgröße Y durch $Y^2$, bzw. $Y^2$ mod N, falls ein Bit des Exponenten gleich 1 ist; und

   nach der sequentiellen Verarbeitung aller Bits des Exponenten, Verwenden (106) des Werts der ersten Hilfsgröße X als das Ergebnis der Exponentiation.

2. Verfahren gemäß Anspruch 1, bei dem in dem Schritt des sequentiellen Verarbeitens (104) von dem höchstwertigen Bit des Exponenten ausgegangen wird.

3. Verfahren gemäß einem der Ansprüche 1 bis 2, bei dem in dem Schritt des Aktualisierens, falls das Bit des Exponenten gleich 1 ist, der Wert $X^2$, bzw $X^2$ mod N, und der Wert X*Y, bzw. X*Y mod N, parallel zueinander berechnet werden.

4. Verfahren gemäß einem der Ansprüche 1 bis 3, bei dem in dem Schritt des Aktualisierens, falls das Bit gleich 0 ist, der Wert X*Y, bzw. X*Y mod N und der Wert $Y^2$, bzw. $Y^2$ mod N parallel zueinander berechnet werden.

5. Verfahren gemäß einem der Ansprüche 3 bis 4, bei dem die modulare Exponentiation bei einer RSA-Entschlüsselung und/oder einer RSA-Verschlüsselung verwendet wird.

**6.** Verfahren gemäß einem der Ansprüche 3 bis 5, bei dem der Exponent d, die Basis B oder der Modul N Ganzzahlen sind.

**7.** Vorrichtung zum Berechnen eines Ergebnisses E einer Exponentiation $B^d$, bzw. $B^d$ mod N, wobei B eine Basis ist und wobei d ein Exponent ist, wobei der Exponent durch eine binäre Zahl aus einer Mehrzahl von Bits darstellbar ist, mit folgenden Merkmalen:

einer Einrichtung zum Initialisieren (102) einer ersten Hilfsgröße X auf einen Wert von 1;

einer Einrichtung zum Initialisieren (102) einer zweiten Hilfsgröße Y auf die Basis B;

einer Einrichtung zum sequentiellen Verarbeiten (104) der Bits des Exponenten durch:

Aktualisieren (104a) der ersten Hilfsgröße X durch $X^2$, bzw. $X^2$ mod N, und Aktualisieren der zweiten Hilfsgröße Y durch X*Y, bzw. X*Y mod N, falls ein Bit des Exponenten gleich 0 ist, oder

Aktualisieren (104b) der ersten Hilfsgröße X durch X*Y, bzw. X*Y mod N, und Aktualisieren der zweiten Hilfsgröße Y durch $Y^2$, bzw. $Y^2$ mod N, falls ein Bit des Exponenten gleich 1 ist; und

einer Einrichtung zum Verwenden (106) des Werts der ersten Hilfsgröße X als das Ergebnis der Exponentiation nach der sequentiellen Verarbeitung aller Bits des Exponenten.

**8.** Vorrichtung gemäß Anspruch 7,
bei der die Einrichtung zum sequentiellen Verarbeiten (104) ein erstes Rechenwerk und ein zweites Rechenwerk aufweist, wobei das erste Rechenwerk und das zweite Rechenwerk angeordnet sind, um parallel zueinander zu arbeiten, und
bei der das erste Rechenwerk angeordnet ist, um $X^2$, bzw. $X^2$ mod N, zu berechnen, falls das Bit des Exponenten 0 ist, oder X*Y, bzw. X*Y mod N, zu berechnen, falls das Bit des Exponenten gleich 1 ist, und
bei der das zweite Rechenwerk angeordnet ist, um X*Y, bzw. X*Y mod N, zu berechnen, falls das Bit gleich 0 ist, und $Y^2$, bzw. $Y^2$ mod N, zu berechnen, falls das Bit gleich 1 ist.

**Claims**

**1.** Method of calculating a result E of an exponentiation $B^d$ and/or $B^d$ mod N, B being a base and d being an exponent, wherein the exponent can be described by a binary number from a plurality of bits, comprising the following steps:

initializing (102) a first auxiliary quantity X to a value of 1;

initializing (102) a second auxiliary quantity Y to the base B;

sequentially processing (104) the bits of the exponent by:

updating (104a) the first auxiliary quantity X by $X^2$ or $X^2$ mod N, respectively, and updating the second auxiliary quantity Y by X*Y or X*Y mod N, respectively, if a bit of the exponent equals 0, or

updating (104b) the first auxiliary quantity X by X*Y or X*Y mod N, respectively, and updating the second auxiliary quantity Y by $Y^2$ or $Y^2$ mod N, respectively, if a bit of the exponent equals 1; and

after sequentially processing all the bits of the exponent, using (106) the value of the first auxiliary quantity X as the result of the exponentiation.

**2.** Method according to claim 1, wherein in the step of sequentially processing (104) the most significant bit of the exponent is started from.

**3.** Method according to one of claims 1 to 2,
wherein in the step of updating, if the bit of the exponent equals 1, the value $X^2$ or $X^2$ mod N, respectively, and the value X*Y or X*Y mod N, respectively, are calculated parallel to each other.

**4.** Method according to one of claims 1 to 3,
wherein in the step of updating, if the bit equals 0, the value X*Y or X*Y mod N, respectively, and the value $Y^2$ or $Y^2$ mod N, respectively, are calculated parallel to each other.

**5.** Method according to one of claims 3 to 4,
wherein the modular exponentiation is used in an RSA decryption and/or an RSA encryption.

**6.** Method according to one of claims 3 to 5, wherein the exponent d, the base B or the module N are integers.

**7.** Device for calculating a result E of an exponentiation $B^d$ and/or $B^d$ mod N, B being a base and d being an exponent, wherein the exponent can be described by a binary number from a plurality of bits, comprising:

means for initializing (102) a first auxiliary quantity X to a value of 1;

means for initializing (102) a second auxiliary quantity Y to the base B;

means for sequentially processing (104) the bits of the exponent by:

updating (104a) the first auxiliary quantity X by $X^2$ or $X^2$ mod N, respectively, and updating the second auxiliary quantity Y by X*Y or X*Y mod N, respectively, if a bit of the exponent equals 0, or

updating (104b) the first auxiliary quantity X by X*Y or X*Y mod N, respectively, and updating the second auxiliary quantity Y by $Y^2$ or $Y^2$ mod N, respectively, if a bit of the exponent equals 1; and

means for using (106) the value of the first auxiliary quantity X as the result of the exponentiation after sequentially processing all the bits of the exponent.

**8.** Device according to claim 7,
wherein means for sequentially processing (104) comprises a first calculating unit and a second calculating unit, the first calculating unit and the second calculating unit being arranged to operate parallel to each other, and wherein the first calculating unit is arranged to calculate $X^2$ or $X^2$ mod N, respectively, if the bit of the exponent equals 0, or to calculate X*Y or X*Y mod N, respectively, if the bit of the exponent equals 1, and wherein the second calculating unit is arranged to calculate X*Y or X*Y mod N, respectively, if the bit equals 0, and to calculate $Y^2$ or $Y^2$ mod N, respectively, if the bit equals 1.

**Revendications**

**1.** Procédé pour calculer un résultat E d'une élévation à une puissance Bd ou Bd mod N, B étant une base et d un exposant et l'exposant pouvant être représenté par un nombre binaire à partir d'un grand nombre de bits, ayant les étapes suivantes :

- initialiser (102) une première grandeur auxiliaire X à une valeur 1,
- initialiser (102) une deuxième grandeur auxiliaire Y à une base B,
- traiter séquentiellement (104) les bits de l'exposant
  en mettant à jour (104a) la première grandeur auxiliaire X par $X^2$ ou par $X^2$ mod N et en mettant à jour la deuxième grandeur auxiliaire Y par X*Y ou par X*Y mod N si un bit de l'exposant est égal à 0 ou
  en mettant à jour (104b) la première grandeur auxiliaire X par X*Y ou par X*Y mod N et en mettant à jour la deuxième grandeur auxiliaire Y par $Y^2$ ou par $Y^2$ mod N si un bit de l'exposant est égal à 1 ; et
- après que tous les bits de l'exposant ont été traités séquentiellement, utiliser (106) la valeur de la première grandeur auxiliaire X comme résultat de l'élévation à une puissance.

**2.** Procédé selon la revendication 1, dans lequel à l'étape du traitement séquentiel (104) on part du bit à valeur maximale de l'exposant.

**3.** Procédé selon l'une des revendications 1 ou 2, dans lequel si le bit de l'exposant est égal à 1 à l'étape de mise à jour, la valeur $X^2$ ou $X^2$ mod N et la valeur X*Y ou X*Y mod N sont calculées parallèlement l'une de l'autre.

4. Procédé selon l'une des revendications 1 à 3, dans lequel si le bit est égal à 0 à l'étape de mise à jour, la valeur X*Y ou X*Y mod N et la valeur $Y^2$ ou $Y^2$ mod N sont calculées parallèlement l'une de l'autre.

5. Procédé selon l'une des revendications 3 ou 4, dans lequel l'élévation à une puissance modulaire est utilisée lors d'un déchiffrement RSA et/ou d'un chiffrement RSA.

6. Procédé selon l'une des revendications 3 à 5, dans lequel l'exposant d, la base B ou le module N sont des nombres entiers.

7. Dispositif pour calculer un résultat E d'une élévation à une puissance Bd ou Bd mod N, B étant une base et d un exposant et l'exposant pouvant être représenté par un nombre binaire à partir d'un grand nombre de bits, comportant les caractéristiques suivantes :

   - une installation pour initialiser (102) une première grandeur auxiliaire X à une valeur 1,
   - une installation pour initialiser (102) une deuxième grandeur auxiliaire Y à une base B,
   - une installation pour traiter séquentiellement (104) les bits de l'exposant
     en mettant à jour (104a) la première grandeur auxiliaire X par $X^2$ ou par $X^2$ mod N et en mettant à jour la deuxième grandeur auxiliaire Y par X*Y ou par X*Y mod N si un bit de l'exposant est égal à 0 ou
     en mettant à jour (104b) la première grandeur auxiliaire X par X*Y ou par X*Y mod N et en mettant à jour la deuxième grandeur auxiliaire Y par $Y^2$ ou par $Y^2$ mod N si un bit de l'exposant est égal à 1 ; et
   - une installation pour utiliser (106) la valeur de la première grandeur auxiliaire X comme résultat de l'élévation à une puissance après que tous les bits de l'exposant ont été traités séquentiellement.

8. Dispositif selon la revendication 7, dans lequel

   - l'installation de traitement séquentiel (104) a une première unité arithmétique et une deuxième unité arithmétique, la première unité arithmétique et la deuxième unité arithmétique étant disposées de façon à travailler parallèlement l'une à l'autre,
   - la première unité arithmétique est disposée pour calculer $X^2$ ou $X^2$ mod N si le bit de l'exposant est 0, ou bien X*Y ou X*Y mod N si le bit de l'exposant est égal à 1 et
   - la deuxième unité arithmétique est placée pour calculer X*Y ou X*Y mod N si le bit de l'exposant est 0, ou bien $Y^2$ ou $Y^2$ mod N si le bit de l'exposant est égal à 1.

Eingabe von B, d — 100

Initialisieren:
X:=1 ; Y:=B — 102

sequentielles Verarbeiten
der Bits $d_i$ von d — 104

| $d_i=0$ | $d_i=1$ |
|---|---|
| $X:=X^2$ | $X:=X \cdot Y$ |
| $Y:=X \cdot Y$ | $Y:=Y^2$ |

104a          104b

Ergebnis E:=X
$[E=B^d]$ — 106

FIG 1

• • •

| sequentielles Verarbeiten der Bits $d_i$ von d | | 104 |
|---|---|---|
| $d_i=0$ | $d_i=1$ | |
| $X:=X^2 \bmod N$ $Y:=X \cdot Y \bmod N$ | $X:=X \cdot Y \bmod N$ $Y:=Y^2 \bmod N$ | |

104a      104b

| Ergebnis $E:=X$ $[E=B^d \bmod N]$ | 106 |
|---|---|

## FIG 2

Eingabe von B, d, N — 32

Initialisierung E:=1 — 34

ja          nein

$d_i = 1?$

36

$E := E^2$ — 38

$E := E^2$ — 38′

$E := B \cdot E$ — 40

DUMMY-MULT. — 40′

$E := E \bmod N$ — 44

$E := E \bmod N$ — 44′

46

ja

noch weitere $d_i$ — 42

"Square-And-Multiply"-Algorithmus

nein

$E = B^d$ — 30

FIG 3